# EUROPEAN PATENT SPECIFICATION

(11) **EP 4 199 218 B1**
(45) Date of publication and mention of the grant of the patent: **18.03.2026**
(21) Application number: 21955388.0
(22) Date of filing: 31.08.2021
(51) Int. Cl.: H01M 50/244

(54) **BATTERY, ELECTRICAL DEVICE, AND METHOD AND DEVICE FOR MANUFACTURING BATTERY**
BATTERIE, ELEKTRISCHES GERÄT SOWIE VERFAHREN UND VORRICHTUNG ZUR HERSTELLUNG EINER BATTERIE
BATTERIE, DISPOSITIF ÉLECTRIQUE, PROCÉDÉ ET DISPOSITIF DE FABRICATION DE BATTERIE

(43) Date of publication of application: 21.06.2023
(73) Proprietor: Contemporary Amperex Technology (Hong Kong) Limited, Central, Central And Western District (HK)
(72) Inventor: SUN, Dongsheng, Ningde, Fujian 352000 (CN)
(74) Representative: Gong, Jinping
(86) International application number: PCT/CN2021/115578
(87) International publication number: WO 2023/028816

(56) References cited:
- CN-A- 103 534 834
- CN-A- 106 601 950
- CN-U- 203 103 373
- CN-U- 208 385 495
- US-A1- 2010 196 751

## Description

### Technical Field

The present application relates to the technical field of batteries, and specifically to a battery as specified in any of claims 1-14, an electrical device as specified in claim 15.

### Background Art

Currently, a lithium-ion battery is generally the one used much more in a vehicle. As a rechargeable battery, the lithium-ion battery has advantages of a small volume, high energy density, high power density, many cycles of use, and a long storage time, etc. CN103534834A relates to a battery pack.

The battery generally includes a box body, a bracket and a battery cell, and the bracket is used for limiting a position of the battery cell to prevent the battery cell from moving in the box body. However, if the designed position of the bracket is unreasonable, it is easy to affect the safety performance of the battery cell. Therefore, it is an urgent problem to be solved in the battery field how to reduce the impact of the bracket on the safety performance of the battery cell.

### Summary of the Invention

The claimed subject-matter is defined by the appended claims. An embodiment of the present application provides a battery, an electrical device, and a method and device for manufacturing a battery, so as to reduce the influence of a bracket on the safety performance of a battery cell.

In a first aspect, an embodiment of the present application provides a battery as specified in any of claims 1-14, including a battery cell and a bracket. The battery cell comprises a case and an end cover that are hermetically connected, with a first position-limiting portion being provided on a side wall of the case. The bracket is provided with a second position-limiting portion that is configured to be snap fitted with the first position-limiting portion to limit a position of the battery cell at least in an axial direction of the battery cell; where the bracket further includes a body part connected with the second position-limiting portion, the body part is disposed corresponding to the side wall, and the second position-limiting portion and the body part encloses an accommodating part which is configured to accommodate at least part of the side wall; and where one end of the body part along the axial direction is provided with two of the second position-limiting portions which extend in opposite directions to form two of the accommodating parts with the body part, the two of the accommodating parts are disposed on two opposite sides of the bracket, and each of the accommodating parts is provided with one of the battery cells correspondingly.

In the aforementioned technical solution, the first position-limiting portion on the side wall of the battery cell and the second position-limiting portion on the bracket are snap fitted, so that not only the axial position limitation of the battery cell can be realized, but also the second position-limiting portion can give place to the end cover to give a space of the battery cell in the axial direction so that the end cover can be actuated to relieve the internal pressure of the battery cell when the internal pressure or temperature of the battery cell reaches a threshold. The end cover can be actuated to realize pressure relief without the need of overcoming the limitation of the second position-limiting portion on the bracket that limits the position of the battery cell in the axial direction, and the bracket is prevented from affecting the pressure relief of the battery cell, thereby relieving the pressure of the battery cell in time, reducing the risk of explosion caused by excessive internal pressure of the battery cell and the like, and improving the safety performance of the battery.

In some embodiments of the first aspect of the present application, one of the first position-limiting portion and the second position-limiting portion is a clamping groove, and the other is a first protrusion.

In the aforementioned technical solution, the first position-limiting portion and the second position-limiting portion form a concave-convex fit to realize the position limitation of the battery cell in the axial direction, and the first position-limiting portion and the second position-limiting portion are simple in structure and simple in fitting manner.

In some embodiments of the first aspect of the present application, the clamping groove is an annular groove disposed on an outer surface of the side wall.

In the aforementioned technical solution, the clamping groove is an annular groove disposed on an outer surface of the side wall, so that when the battery cell is mounted on the bracket, the difficulty of positioning the clamping groove and the first protrusion is reduced, thereby reducing the difficulty in mounting the battery cell and the bracket.

In some embodiments of the first aspect of the present application, a convex portion protruding toward the interior of the battery cell is formed at a position on an inner surface of the side wall corresponding to the annular groove; and the convex portion is configured to limit the end cover from moving in a direction towards the interior of the battery cell.

In the aforementioned technical solution, the convex portion protruding toward the interior of the battery cell is formed at the position on the inner surface of the side wall corresponding to the annular groove; and the convex portion can limit the end cover from moving in the direction towards the interior of the battery cell, so that the formation of the annular groove on the side wall of the battery cell not only will not reduce the structural strength of the side wall of the battery cell, but also enables the annular groove and the first protrusion to cooperate to limit the position of the battery cell in the axial direction, and the convex portion for limiting the position of the end cover is correspondingly formed while the annular groove is formed, which simplifies the manufacturing procedure of the battery cell and reduces the difficulty of manufacturing the battery cell.

In some embodiments of the first aspect of the present application, the second position-limiting portion is disposed at an end portion of the bracket along the axial direction.

In the aforementioned technical solution, by disposing the second position-limiting portion at the end portion of the bracket along the axial direction of the battery cell, the bracket can be reasonably used, and by making the position of the second position-limiting portion close to an end portion of the battery cell along the axial direction as much as possible, the position limitation of the battery cell in the axial direction can be conducted better.

In the aforementioned technical solution, the second position-limiting portion and the body part encloses the accommodating part which can accommodate at least part of the side wall of the battery cell, so that the accommodating part can limit a position of the battery cell from the side of the battery cell, thereby reducing the movement of the battery cell relative to the bracket and improving the mounting stability of the battery cell.

In the aforementioned technical solution, the two second position-limiting portions extend in opposite directions to form two accommodating parts with the body part, and each accommodating part can accommodate one battery cell correspondingly, so that the bracket is fully utilized, and the number of brackets of the battery can be reduced, thereby reducing the weight of the battery.

In some embodiments of the first aspect of the present application, the accommodating part has a fitting surface configured to fit a contour of the outer surface of the side wall.

In the aforementioned technical solution, the accommodating part has a fitting surface that fits the contour of the outer surface of the side wall, so that the accommodating part can better limit the position of the battery cell and reduce the possibility of the battery cell moving relative to the bracket.

In some embodiments of the first aspect of the present application, the fitting surface is an arc surface, and the fitting surface is configured to limit a position of the battery cell along a radial direction of the battery cell.

In the aforementioned technical solution, the fitting surface limits the position of the battery cell along the radial direction of the battery cell, so that the battery cell can be stably mounted on the bracket, and the possibility of the battery cell moving relative to the bracket is reduced.

In some embodiments of the first aspect of the present application. The battery comprises two of the brackets, and the two of the brackets are buckled on an outer periphery of one of the battery cells.

In the aforementioned technical solution, the two brackets are buckled on the outer periphery of one battery cell, and the two brackets can completely limit the position of the battery cell in the radial and axial directions, so that the battery can be mounted on the bracket more stably, and the possibility of the battery cell moving relative to the bracket is reduced.

In some embodiments of the first aspect of the present application, the two of the brackets are connected fixedly.

In the aforementioned technical solution, the two brackets are fixedly connected, so that the two brackets remain the state of being buckled on the outer periphery of one battery cell, and thus the battery is more stably mounted on the bracket, and the possibility of the battery cell moving relative to the bracket is reduced.

In some embodiments of the first aspect of the present application. The battery comprises a plurality of the brackets that are arranged side by side and integrally formed.

In the aforementioned technical solution. The battery comprises the plurality of brackets that are arranged side by side, and thus a plurality of battery cells can be mounted, which can increase the electric energy of the battery. A plurality of brackets is integrally formed and are easy to manufacture, and the plurality of brackets arranged side by side do not need to be connected when assembled into the battery, which simplifies the manufacturing procedure of the battery and reduces the manufacturing difficulty of the battery.

In some embodiments of the first aspect of the present application, a side of the bracket opposite to the corresponding battery cell is a plane.

In the aforementioned technical solution, the side of the bracket opposite to the corresponding battery cell is a plane, which facilitates the mounting of the bracket and enables the bracket to better cooperate with other structures.

In some embodiments of the first aspect of the present application, two of the first position-limiting portions are disposed on the side wall, and the two of the first position-limiting portions are arranged at intervals along the axial direction on the side wall of the case; and each of the second position-limiting portions is configured to be snap fitted with one of the first position-limiting portions.

In the aforementioned technical solution, the two of the first position-limiting portions are disposed on the side wall, and each of the second position-limiting portions is configured to be snap fitted with one of the first position-limiting portions, so as to limit the position of the battery cell in the axial direction more firmly.

In some embodiments of the first aspect of the present application, the case is cylindrical.

In the aforementioned technical solution, the case of the battery cell is cylindrical, that is, the case has a regular structure, which is more convenient for the battery cell to be mounted on the bracket.

In some embodiments of the first aspect of the present application, the battery further includes a box body, wherein the battery cell is accommodated in the box body, and the bracket is fixed in the box body.

In the aforementioned technical solution, the bracket is fixed in the box body to prevent the bracket from moving in the box body, thereby reducing the possibility of the battery cell moving in the box body.

In some embodiments of the first aspect of the present application, the bracket is further provided with a flow channel configured to accommodate a fluid for regulating the temperature of the battery cell.

In the aforementioned technical solution, the fluid contained in the flow channel can regulate the temperature of the battery cell. The fluid contained in the flow channel increases the temperature of the battery cell to make the battery cell operate normally when the environmental temperature is relatively lower, and reduces the temperature of the battery cell to make the battery cell operate normally and ensure the safety of the battery when the environmental temperature or the temperature of the battery cell is too high. The flow channel not only can accommodate the fluid that regulates the temperature of the battery cell to regulate the temperature of the battery cell, but also can reduce the weight of the bracket, thereby reducing the weight of the battery.

In some embodiments of the first aspect of the present application, the flow channel runs through both ends of the bracket, along the axial direction of the battery cell.

In the aforementioned technical solution, the flow channel runs through both ends of the bracket, which facilitates the heat exchange between the fluid flowing through the flow channel and the battery cell, and improves the temperature regulation efficiency of the battery cell.

In a second aspect, an embodiment of the present application provides an electrical device as specified in claim 15, including the battery provided by the embodiment of the first aspect.

In the aforementioned technical solution, the first position-limiting portion on the side wall of the battery cell and the second position-limiting portion on the bracket are snap fitted, so that not only the axial position limitation of the battery cell can be realized, but also the second position-limiting portion can give place to the end cover to give a space of the battery cell in the axial direction so that the end cover can be actuated to relieve the internal pressure of the battery cell when the internal pressure or temperature of the battery cell reaches a threshold. The end cover can be actuated to realize pressure relief without the need of overcoming the limitation of the second position-limiting portion on the bracket that limits the position of the battery cell in the axial direction, and the bracket is prevented from affecting the pressure relief of the battery cell, thereby relieving the pressure of the battery cell in time, reducing the risk of explosion caused by excessive internal pressure of the battery cell and the like, improving the safety performance of the battery cell, and thus improving the safety of electricity utilization.

In a non-claimed aspect, an embodiment of the present application provides a method for manufacturing a battery, including:
providing a battery cell ;
wherein the battery cell comprises a case and an end cover that are hermetically connected, with a first position-limiting portion being provided on a side wall of the case; and
providing a bracket that is provided with a second position-limiting portion; and
mounting the battery cell on the bracket, so that the second position-limiting portion is snap fitted with the first position-limiting portion to realize position limitation of the battery cell in the axial direction of the battery cell.

In the aforementioned technical solution, the first position-limiting portion on the battery cell and the second position-limiting portion on the bracket are snap fitted, so that not only the axial position limitation of the battery cell can be realized, but also the second position-limiting portion can give place to the end cover to give a space of the battery cell in the axial direction so that the end cover can be actuated to relieve the internal pressure of the battery cell when the internal pressure or temperature of the battery cell reaches a threshold. The end cover can be actuated to realize pressure relief without the need of overcoming the limitation of the second position-limiting portion on the bracket that limits the position of the battery cell in the axial direction, and the bracket is prevented from affecting the pressure relief of the battery cell, thereby relieving the pressure of the battery cell in time, reducing the risk of explosion caused by excessive internal pressure of the battery cell and the like, and improving the safety performance of the battery cell.

In a non-claimed aspect, an embodiment of the present application provides a device for manufacturing a battery, including a providing means and an assembling means. The providing means is configured to provide a battery cell and a bracket. The battery cell comprises a case and an end cover that are hermetically connected, with a first position-limiting portion being provided on a side wall of the case. The bracket is provided with a second position-limiting portion; the assembling means is configured to mount the battery cell on the bracket, so that the second position-limiting portion is snap fitted with the first position-limiting portion to limit a position of the battery cell at least in an axial direction of the battery cell.

### Description of Drawings

In order to illustrate the technical solution of the embodiments of the present application more clearly, the drawings that need to be used in the embodiments will be briefly introduced below. It should be understood that the following drawings only show some embodiments of the present application, so they should not be regarded as limiting the scope. Other relevant drawings can also be derived by those of ordinary skills in the art from these accompanying drawings without creative efforts.
Fig. 1 is a schematic structural view of a vehicle provided by some examples of the present application;
Fig. 2 is a schematic structural diagram of a battery provided by some examples of the present application;
Fig. 3 is an explosion diagram of a battery cell provided by some examples of the present application;
Fig. 4 is a schematic diagram of a battery cell mounted on a bracket as provided by some examples of the present application;
Fig. 5 is an enlarged view of I in Fig. 4;
Fig. 6 is a cross-sectional view of a battery cell provided by some examples of the present application;
Fig. 7 is an enlarged view of II in Fig. 6;
Fig. 8 is a schematic structural view of a bracket provided by some examples of the present application;
Fig. 9 is an enlarged view of III in Fig. 8;
Fig. 10 is a schematic structural view of a bracket provided by other examples of the present application from a first perspective;
Fig. 11 is a schematic structural view of a bracket provided by other examples of the present application from a second perspective;
Fig. 12 is a structural view after the battery cell and two brackets provided by some examples of the present application are assembled;
Fig. 13 is a structural view before the battery cell and two brackets provided by some examples of the present application are assembled;
Fig. 14 is a schematic structural view of a plurality of brackets arranged side by side as provided by some examples of the present application;
Fig. 15 is a schematic diagram of an arrangement of two rows of brackets as provided by some examples of the present application;
Fig. 16 is a schematic structural view of a battery including two rows of brackets as provided by some examples of the present application;
Fig. 17 is a schematic diagram of an arrangement of three rows of brackets as provided by some examples of the present application;
Fig. 18 is a schematic structural view of a battery including three rows of brackets as provided by some examples of the present application;
Fig. 19 is a schematic structural view of a battery provided by still other examples of the present application;
Fig. 20 is a schematic structural view of a battery provided by yet still other examples of the present application;
Fig. 21 is a flowchart of a method for manufacturing a battery as provided by some examples of the present application; and
Fig. 22 is a schematic structural view of a device for manufacturing a battery as provided by examples of the present application.

legend: 1000-vehicle; 100-battery; 10-battery cell; 11-case; 111-side wall; 112-opening; 113-convex portion; 12-end cover; 13-first position-limiting portion; 14-electrode assembly; 15-insulator; 20-bracket; 21-second position-limiting portion; 211-notch; 22-body part; 23-accommodating part; 231-fitting surface; 24-abutting surface; 20a-first row; 20b-second row; 20c-middle row; 25-flow channel; 30-box body; 31-mounting space; 32-first part; 33-second part; 200-controller; 300-motor; 2000-battery manufacturing device; 2100-providing means; 2200-assembling means; A-first direction; and B-second direction.

### Detailed Description

For the objects, technical solutions and advantages of the examples of the present application to be clearer, the technical solutions in the examples of the present application will be clearly and completely described below in conjunction with the drawings in the examples of the present application, and it is apparent that the described examples are a part of the examples of the present application rather than all the examples. The assembly of the examples of the present application generally described and illustrated in the drawings herein can be arranged and designed in a variety of different configurations.

Accordingly, the following detailed description of the examples of the present application provided in the drawings is not intended to limit the scope of the claimed application, rather it is only representative of selected examples of the present application. Based on the embodiments in the present application, all other embodiments obtained by those of ordinary skills in the art without creative labor are within the claimed scope of the present application.

It should be noted that the examples in the present application and the features in the examples can be combined with each other without conflict.

It should be noted that like numerals and letters refer to like items in the following figures, and thus once an item is defined in one figure, further definition and explanation of it is not required in subsequent figures.

In the description of the embodiments of the present application, it should be noted that the indicated orientation or positional relationship is based on the orientation or positional relationship shown in the accompanying drawings, or is the orientation or positional relationship that the product of the present application is commonly placed in use, or is the orientation or positional relationship that is commonly understood by those skilled in the art. It is only for the convenience of describing the present application and simplifying the description, rather than indicating or implying that the referred means or elements must have a specific orientation, be constructed and operated in a specific orientation, and therefore cannot be understood as a limitation of the present application. Moreover, the terms "first", "second" and "third" etc. are only used for distinguishable description, and cannot be understood as indicating or implying relative importance.

A lithium-ion battery has become a mainstream product of secondary battery due to its outstanding advantages such as high energy density and good cycling performance, and is widely applied in portable electrical appliances, power vehicles, mobile phones, spacecrafts and the like fields.

A battery generally includes a battery cell and a bracket for limiting a position of the battery cell. The battery cell comprises a case, an end cover and an electrode assembly. The end cover is hermetically connected to one end of the battery cell in an axial direction. The case and the end cover jointly define an accommodating cavity for accommodating the electrode assembly. There is a risk of a sharp increase in the internal pressure or temperature of the battery cell during a charging and discharging process. When the internal pressure or temperature of the battery cell is increased to a certain value, if the internal pressure or temperature is not relieved, it is prone to fire or explosion and the like safety accidents. Therefore, in order to ensure the safety of the battery, a pressure relief mechanism is generally disposed on the end cover. The pressure relief mechanism is activated when the internal pressure or temperature of the battery reaches a threshold, so as to relieve the internal pressure of the battery through the pressure relief mechanism.

The inventor has noticed that since the battery has requirements on the structural strength of the case of the battery cell, the pressure relief mechanism is generally disposed on the end cover. In some structures of the battery cell, the battery cell may also be provided with no special pressure relief mechanism and instead the end cover itself is used as the pressure relief mechanism. When the internal pressure or temperature of the battery reaches a threshold, the end cover is actuated, so that the connection relationship between the end cover and the case is broken, and thus the internal pressure of the battery can be relieved. No matter whether the battery cell is provided with a special pressure relief mechanism or the pressure relief is conducted through the end cover itself, the pressure relief position is on at least one end of the battery cell in the axial direction.

The position limitation of the battery cell by the bracket includes an axial position limitation, wherein the axial position limitation of the battery cell is achieved by abutting at least one end of the battery cell in the axial direction against the position-limiting portion on the bracket. The position-limiting portion of the bracket will block the actuation of the pressure relief mechanism or the end cover. The pressure relief mechanism or the end cover needs to overcome the obstacle of the position-limiting portion of the bracket first before relief of the internal pressure of the battery cell is realized, so that the pressure relief of the battery cell is not timely or cannot be realized, resulting in fire, explosion and the like safety accidents.

Based on this, in order to improve the impact of the bracket on the pressure relief of the battery cell, the inventor has made an in-depth study in which a battery is involved. The first position-limiting portion on the side wall of the battery cell and the second position-limiting portion on the bracket are snap fitted, so that not only the axial position limitation of the battery cell can be realized, but also the second position-limiting portion can give place to the end cover to give a space of the battery cell in the axial direction so that the end cover can be actuated to relieve the internal pressure of the battery cell when the internal pressure or temperature of the battery cell reaches a threshold. The end cover can be actuated to realize pressure relief without the need of overcoming the limitation of the second position-limiting portion on the bracket that limits the position of the battery cell in the axial direction, and the bracket is prevented from affecting the pressure relief of the battery cell, thereby relieving the pressure of the battery cell in time, reducing the risk of explosion caused by excessive internal pressure of the battery cell and the like, and improving the safety performance of the battery.

The battery described in the embodiments of the present application is suitable for an electrical device using a battery.

The electrical device may be a vehicle, a mobile phone, a portable device, a laptop, a ship, a spacecraft, an electric toy, an electric tool, and the like. The vehicle may be a fuel vehicle, a gas vehicle or a new energy vehicle. The new energy vehicle may be an all-electric vehicle, a hybrid electric vehicle, an extended range electric vehicle, or the like. The spacecraft includes airplanes, rockets, space shuttles, spaceships, and the like. The electric toy includes fixed or mobile electric toys, such as game consoles, electric car toys, electric ship toys and electric airplane toys. The electric tool includes metal cutting electric tools, grinding electric tools, assembly electric tools and railway electric tools, such as electric drills, electric grinders, electric wrenches, electric screwdrivers, electric hammers, electric impact drills, concrete vibrators, electric planers, and the like. The embodiments of the present application have no special limitation on the aforementioned electrical device.

In the following examples, for the convenience of illustration, a vehicle is taken as an example of the electrical device for illustration.

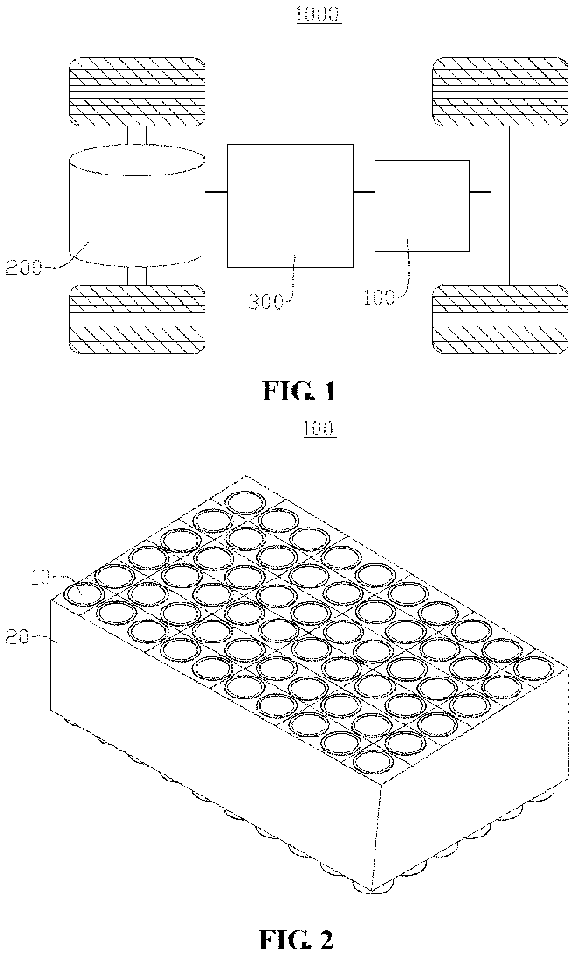

Please refer to Fig. 1, which is a schematic structural diagram of a vehicle 1000 provided by some examples of the present application. The interior of the vehicle 1000 is provided with a battery 100, which can be disposed at the bottom or head or tail of the vehicle 1000. The battery 100 can be used for powering the vehicle 1000, for example, the battery 100 can serve as an operating power source for the vehicle 1000.

The vehicle 1000 may further include a controller 200 and a motor 300. The controller 200 is used for controlling the battery 100 to power the motor 300, for example, for the operating power demand during starting, navigating and driving of the vehicle 1000.

In some embodiments of the present application, the battery 100 not only can serve as an operating power source of the vehicle 1000, but also can serve as a driving power source of the vehicle 1000, thereby replacing or partially replacing fuel or natural gas to provide driving power for the vehicle 1000.

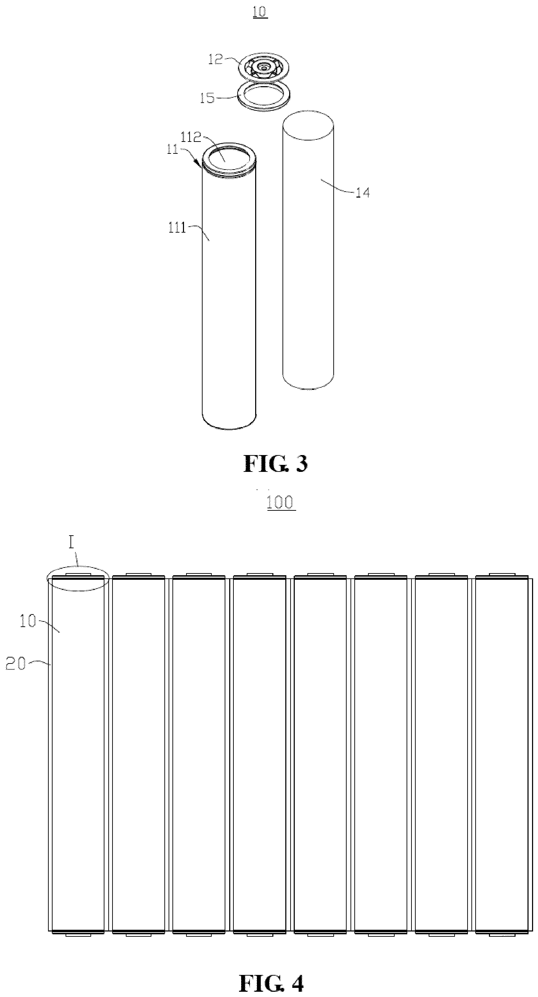

Referring to Figs. 2 and 3, Fig. 2 is a schematic structural view of the battery 100 provided by some examples of the present application, and Fig. 3 is an explosion diagram of a battery cell 10 provided by some examples of the present application. The battery 100 includes the battery cell 10 and a bracket 20. The battery cell 10 includes a case 11 and an end cover 12 that are hermetically connected, with a first position-limiting portion 13 being disposed on a side wall 111 of the case 11. The bracket 20 is provided with a second position-limiting portion 21 that is configured to be snap fitted with the first position-limiting portion 13 to limit a position of the battery cell 10 at least in an axial direction of the battery cell 10.

The battery cell 10 may include a case 11, an end cover 12, and an electrode assembly 14. The case 11 has an opening 112, the electrode assembly 14 is accommodated in the case 11, and the end cover 12 is used for covering the opening 112.

The side wall 111 of the case 11 of the battery cell 10 refers to a wall disposed surrounding an outer periphery of an axis of the battery cell 10. The first position-limiting portion 13 is disposed on an outer surface of the side wall 111.

The case 11 may be in various shapes, such as a cylinder, a cuboid, or the like. The shape of the case 11 may be determined according to the specific shape of the electrode assembly 14. For example, if the electrode assembly 14 has a cylindrical structure, the case 11 can be selected as a cylindrical structure; and if the electrode assembly 14 has a cuboid structure, the case 11 can be selected as a cuboid structure. Figs. 2 and 3 exemplarily show the case where the case 11 and the electrode assembly 14 are cylindrical.

The case 11 may be made of various materials, such as copper, iron, aluminum, stainless steel, aluminum alloy, and the like, which is not particularly limited in the examples of the present application.

The electrode assembly 14 may include a positive electrode sheet (not shown), a negative electrode sheet (not shown) and a separator (not shown). The electrode assembly 14 may be a wound structure formed by winding a positive electrode sheet, a separator and a negative electrode sheet, or a laminated structure formed by a stacked arrangement of a positive electrode sheet, a separator and a negative electrode sheet. The electrode assembly 14 further includes a positive tab (not shown) and a negative tab (not shown), wherein a positive electrode current collector that is not coated with a positive electrode active material layer in the positive electrode sheet may serve as the positive tab, and a negative electrode current collector that is not coated with a negative electrode active material layer in the negative electrode sheet may serve as the positive tab.

The end cover 12 is used for covering the opening 112 of the case 11 to form a closed accommodating cavity (not shown) which is used for accommodating the electrode assembly 14. The accommodating space is also used for accommodating an electrolyte, such as an electrolyte solution. The end cover 12 is used as a component for outputting the electrical energy of the electrode assembly 14, and an electrode terminal in the end cover 12 is used for electrical connection with the electrode assembly 14. That is, the electrode terminal is electrically connected with the tab of the electrode assembly 14. For example, the electrode terminal and the tab are connected through a current collector (not shown) to realize the electrical connection between the electrode terminal and the tab.

It should be noted that there may be one or two openings 112 of the case 11. As shown in Fig. 3, if there is one opening 112 of the case 11, there may be also one end cover 12, and thus two electrode terminals can be disposed in the end cover 12 and respectively used for electrical connection with the positive and negative tabs of the electrode assembly 14. The two electrode terminals in the assembly of the end cover 12 are respectively a positive electrode terminal and a negative electrode terminal, or alternatively the positive tab of the electrode assembly 14 is electrically connected to the electrode terminal of the end cover 12, the negative tab of the electrode assembly 14 is electrically connected to the case 11, and the end cover 12 is in insulation connection with the case 11. In order to realize the insulation connection between the end cover 12 and the case 11, in some examples, the battery cell 10 further includes an insulator 15 disposed between the end cover 12 and the case 11 to separate the end cover 12 from the case 11, thereby realizing the insulation connection between the end cover 12 and the case 11. If there are two openings 112 of the case 11, for example, the two openings 112 are disposed on opposite sides of the case 11, there may be also two end covers 12, and the two end covers 12 are respectively covered on the two openings 112 of the case 11. In this situation, the case may be that the electrode terminal in one end cover 12 is a positive electrode terminal for electrical connection with the positive tab of the electrode assembly 14; and the electrode terminal in the other end cover 12 is a negative electrode terminal for electrical connection with the negative electrode sheet of the electrode assembly 14.

The second position-limiting portion 21 is disposed on the bracket 20, and the snap fit between the first position-limiting portion 13 and the second position-limiting portion 21 can be realized in such a manner that the first position-limiting portion 13 and the second position-limiting portion 21 are abutted against each other along the axial direction of the battery cell 10, or alternatively the first position-limiting portion 13 and the second position-limiting portion 21 are in concave-convex fit along the axial direction of the battery cell 10.

The first position-limiting portion 13 on the side wall 111 of the battery cell 10 and the second position-limiting portion 21 on the bracket 20 are snap fitted, so that not only the axial position limitation of the battery cell 10 can be realized, but also the second position-limiting portion 21 can give place to the end cover 12 to give a space of the battery cell 10 in the axial direction so that the end cover 12 can be actuated to relieve the internal pressure of the battery cell 10 when the internal pressure or temperature of the battery cell 10 reaches a threshold. The end cover 12 can be actuated to realize pressure relief without the need of overcoming the limitation of the second position-limiting portion 21 on the bracket 20 that limits the position of the battery cell 10 in the axial direction, and the bracket 20 is prevented from affecting the pressure relief of the battery cell 10, thereby relieving the pressure of the battery cell 10 in time, reducing the risk of explosion caused by excessive internal pressure of the battery cell 10 and the like, and improving the safety performance of the battery 100.

In some examples, one of the first position-limiting portion 13 and the second position-limiting portion 21 is a clamping groove, and the other is a first protrusion.

The orientation of the groove mouth of the clamping groove should be arranged at an acute or obtuse angle with the axial direction of the battery cell 10. In some examples, the groove mouth of the clamping groove is consistent with the lateral direction of the battery cell 10, and the lateral direction of the battery cell 10 refers to a direction perpendicular to the axial direction of the battery cell 10. In an example in which the case 11 of the battery cell 10 is cylindrical, the lateral direction of the battery cell 10 may be the radial direction of the battery cell 10.

Along the axial direction of the battery cell 10, the width of the clamping groove is the same as the dimension of the first protrusion along the axial direction of the battery cell 10, so as to avoid the axial movement of the battery cell 10 relative to the bracket 20.

The first position-limiting portion 13 and the second position-limiting portion 21 form a concave-convex fit to realize the position limitation of the battery cell 10 in the axial direction, and the first position-limiting portion 13 and the second position-limiting portion 21 are simple in structure and simple in fitting manner.

In some examples, the clamping groove is an annular groove disposed on the outer surface of the side wall 111.

The annular groove refers to a closed structure extending along a circumferential direction of the side wall 111 of the case 11 and ending in the circumferential direction of the side wall 111 of the case 11. In an example in which the case 11 of the battery cell 10 is cylindrical, the annular groove is a circular structure with a constant radius, and in an example in which the case 11 of the battery cell 10 is a square, the annular groove is a square structure that is consistent with the circumferential contour of the side wall 111 of the case 11.

The clamping groove is an annular groove disposed on the outer surface of the side wall 111, and thus the clamping groove can form a snap fit with the second position-limiting portion 21 at any position along the circumferential direction of the battery cell 10, so that when the battery cell 10 is mounted on the bracket 20, the positioning difficulty of the clamping groove and the first protrusion is reduced, thereby reducing the mounting difficulty of the battery cell 10 and the bracket 20. In still other examples, the clamping groove may be disposed on the bracket 20, and the first protrusion is disposed on the outer surface of the side wall 111 of the case 11.

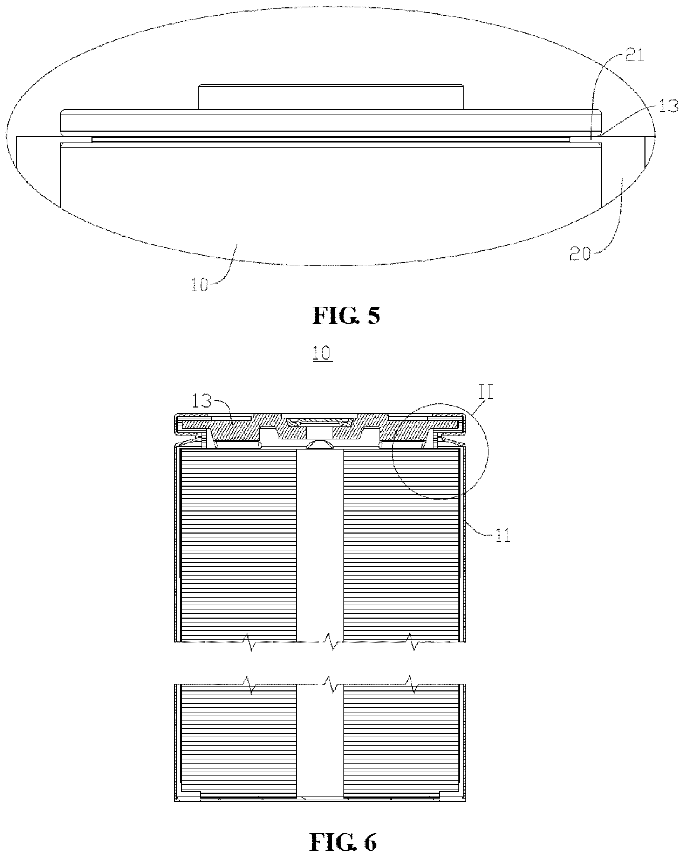

Please refer to Figs. 4 and 5, Fig. 4 is a schematic view of the battery cell 10 mounted on the bracket 20 as provided by some examples of the present application, and Fig. 5 is an enlarged view of I in Fig. 4. The second position-limiting portion 21 is inserted in the first position-limiting portion 13, and two groove walls of the first position-limiting portion 13 along the axial direction of the battery cell 10 are used for abutting against two sides of the second position-limiting portion 21 respectively, so as to limit the position of the battery cell 10 in the axial direction.

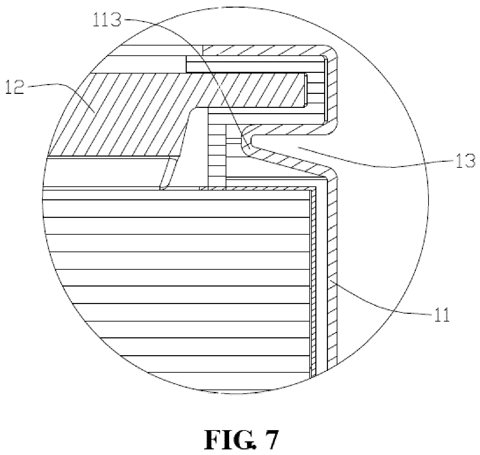

Please refer to Figs. 6 and 7, Fig. 6 is a cross-sectional view of the battery cell 10 provided by some examples of the present application, and Fig. 7 is an enlarged view of II in Fig. 6. In some embodiments, a convex portion 113 protruding toward the interior of the battery cell 10 is formed at a position on the inner surface of the side wall 111 corresponding to the annular groove; and the convex portion 113 is configured to limit the end cover 12 from moving in a direction towards the interior of the battery cell 10.

The end cover 12 is disposed at an end of the case 11 in the axial direction. In order to limit the end cover 12 from moving towards the interior of the battery cell 10, the convex portion 113 is disposed on the inner surface of the case 11, and the convex portion 113 is located on the side of the end cover 12 facing the interior of the battery cell 10. The convex portion 113 is abutted against the end cover 12 on the side of the end cover 12 facing the interior of the battery cell 10, and the convex portion 113 can be in insulation connection with the end cover 12. The convex portion 113 is formed at a position on the inner surface of the side wall 111 corresponding to the annular groove box, then the convex portion 113 is an annular structure matching the annular groove. The annular convex portion 113 can increase the area of the abutting surface 24 against the end cover 12, so as to better limit the end cover 12 from moving along a direction towards the interior of the battery cell 10.

Moreover, the convex portion 113 protruding toward the interior of the battery cell 10 is formed at the position on the inner surface of the side wall 111 corresponding to the annular groove; and the convex portion 113 can limit the end cover 12 from moving in the direction towards the interior of the battery cell 10, so that the formation of the annular groove on the side wall 111 of the battery cell 10 not only will not reduce the structural strength of the side wall 111 of the battery cell 10, but also enables the annular groove and the first protrusion to cooperate to limit the position of the battery cell 10 in the axial direction, and the convex portion 113 for limiting the position of the end cover 12 is correspondingly formed while the annular groove is formed, which simplifies the manufacturing procedure of the battery cell 10 and reduces the difficulty of manufacturing the battery cell 10.

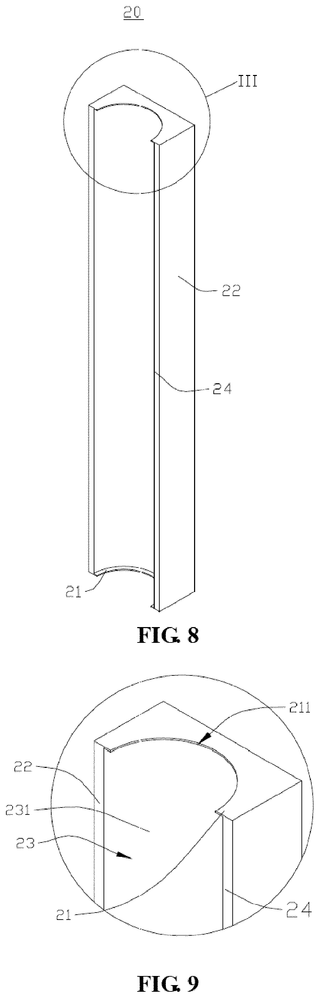

Please refer to Figs. 8 and 9, Fig. 8 is a schematic structural view of a bracket 20 provided by some examples of the present application, and Fig. 9 is an enlarged view of III in Fig. 8. The end face at which the second position-limiting portion 21 is inserted in the first position-limiting portion 13 is provided with a notch 211. The notch 211 runs through both sides of the second position-limiting portion 21 along the axial direction of the battery cell 10, and the notch 211 has an abutting surface which matches the bottom wall of the annular groove opposite to the notch 211.

Please continue to refer to Figs. 8 and 9, in some examples, the second position-limiting portion 21 is disposed at the end portion of the bracket 20 along the axial direction.

The second position-limiting portion 21 is disposed at the end portion of the bracket 20 along the axial direction, the first position-limiting portion 13 is disposed on the side wall 111 of the case 11, and along the axial direction of the battery cell 10, the battery cell 10 is disposed in such a manner that one end of the end cover 12 can extend out of the bracket 20 so as to facilitate the output of electric energy of the battery cell 10. By disposing the second position-limiting portion 21 at the end portion of the bracket 20 along the axial direction of the battery cell 10, the bracket 20 can be reasonably used, and by making the position of the second position-limiting portion 21 close to an end portion of the battery cell 10 along the axial direction as much as possible, the position limitation of the battery cell 10 in the axial direction can be conducted better. In other examples, the second position-limiting portion 21 may also be disposed at other positions of the bracket 20, for example, the second position-limiting portion 21 is disposed in the middle of the bracket 20. In an example in which the convex portion 113 is formed on the inner surface of the case 11, the second position-limiting portion 21 is disposed at the end of the bracket 20 along the axial direction of the battery cell 10, so that the convex portion 113 can give place to the area of the electrode assembly 14 (as shown in Figs. 3 and 6), so as to improve the energy density of the battery cell 10.

Referring to Figs. 8 and 9, in some examples, the bracket 20 further includes a body part 22 connected to the second position-limiting portion 21, the body part 22 is disposed corresponding to the side wall 111, the second position-limiting portion 21 and the body part 22 encloses an accommodating part 23 that is configured to accommodate at least part of the side wall 111.

Along the axial direction of the battery cell 10, the accommodating part 23 is communicated with the notch 211. The accommodating part 23 has an inlet for allowing the side wall 111 of the case 11 to enter the accommodating part 23. The fact that the accommodating part 23 is configured to accommodate at least part of the side wall 111 refers to that part of the side wall 111 may be limited in the accommodating part 23, or alternatively the entire side wall 111 may be limited in the accommodating part 23.

The body part 22 is disposed corresponding to the side wall 111, the body part 22 may be disposed opposite to the side wall 111, and the extending direction of the body part 22 is consistent with the axial direction of the side wall 111.

The second position-limiting portion 21 and the body part 22 encloses an accommodating part 23 that can accommodate at least part of the side wall 111 of the battery cell 10, so that the accommodating part 23 can limit the position of the battery cell 10 from the side of the battery cell 10, thereby reducing the movement of the battery cell 10 relative to the bracket 20 and improving the mounting stability of the battery cell 10.

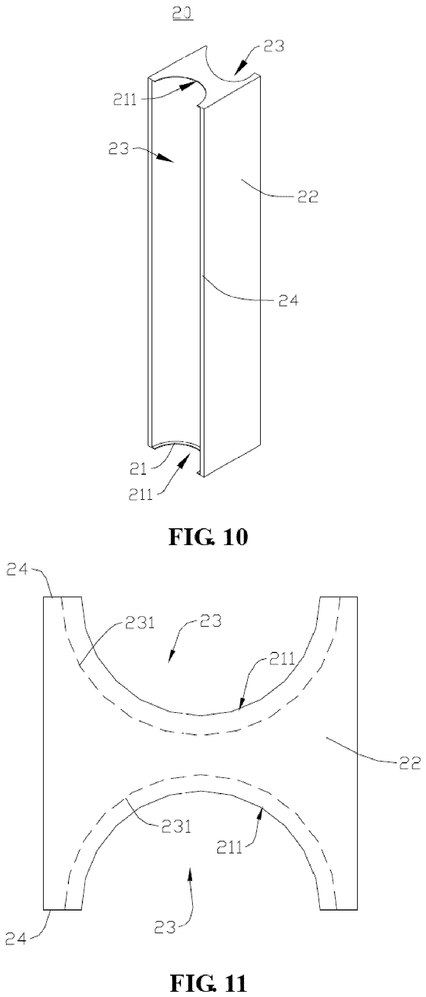

Please refer to Figs. 10 and 11. Fig. 10 is a schematic structural view of the bracket 20 provided by other examples of the present application from a first perspective, and Fig. 11 is a schematic structural view of the bracket 20 provided by other examples of the present application from a second perspective. In some examples, the end of the body part 22 along the axial direction is provided with two second position-limiting portions 21, and the two second position-limiting portions 21 extend in opposite directions to form two accommodating parts 23 with the body part 22, The two accommodating parts 23 are disposed on opposite sides of the bracket 20, and each accommodating part 23 is provided with one battery cell 10 correspondingly.

The two second position-limiting portions 21 extend in opposite directions to form two accommodating parts 23 with the body part 22, and each accommodating part 23 can accommodate one battery cell 10 correspondingly, so that the bracket 20 is fully utilized, and the number of brackets 20 of the battery 100 can be reduced, thereby reducing the weight of the battery 100.

In some examples, the accommodating part 23 has a fitting surface 231 that is configured to fit the contour of the outer surface of the side wall 111.

The fact that the fitting surface 231 is configured to fit the contour of the outer surface of the side wall 111 refers to that after the battery cell 10 is mounted on the bracket 20, the part of the outer surface of the side wall 111 facing the accommodating part 23 fits the fitting surface 231. In an example in which the battery cell 10 is cylindrical, the outer surface of the side wall 111 is a cylindrical surface, and the fitting surface 231 is an arc surface with a radius equal to that of the side wall 111. In an example in which the battery cell 10 is square, the outer surface of the side wall 111 is a square surface, and then the fitting surface 231 is of a shape that matches the part of the outer surface of the side wall 111 facing the accommodating part 23.

In an example in which the second position-limiting portion 21 is the first protrusion, the first protrusion protrudes from the fitting surface 231, that is, the second position-limiting portion 21 protrudes from the fitting surface 231. The dimension of the first protrusion protruding from the fitting surface 231 is the same as the depth of the clamping groove along the radial direction of the battery cell 10, so that after the first protrusion is inserted into the clamping groove, the outer surface of the side wall 111 of the case 11 fits the fitting surface 231, and the end of the first protrusion opposite to the fitting surface 231 is abutted against the bottom wall of the clamping groove.

The accommodating part 23 has a fitting surface 231 that fits the contour of the outer surface of the side wall 111, so that the accommodating part 23 can better limit the position of the battery cell 10 and reduce the possibility of the battery cell 10 moving relative to the bracket 20.

In some embodiments, the fitting surface 231 is an arc surface, and the fitting surface 231 is configured to limit the position of the battery cell 10 along the radial direction of the battery cell 10.

The fitting surface 231 is configured to limit the position of the battery cell 10 along the radial direction of the battery cell 10, and then the fitting surface 231 extends along the circumferential direction of the side wall 111 and clads part of the outer surface of the side wall 111.

The fitting surface 231 limits the position of the battery cell 10 along the radial direction of the battery cell 10, so that the battery cell 10 can be stably mounted on the bracket 20, and the possibility of the battery cell 10 moving relative to the bracket 20 is reduced.

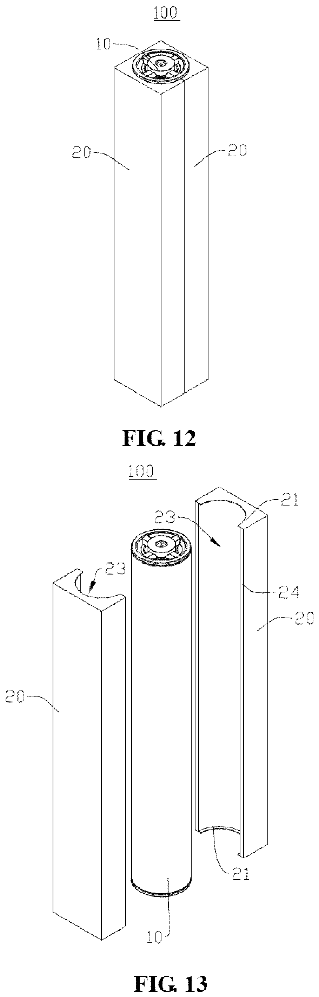

Please refer to Figs. 12 and 13, Fig. 12 is a structural view after assembly of the battery cell 10 and two brackets 20 provided by some examples of the present application, and Fig. 13 is a structural view before assembly of the battery cell 10 and two brackets 20 provided by some examples of the present application. In some examples, the battery 100 includes two brackets 20, and the two brackets 20 are buckled on the outer periphery of one battery cell 10.

The two brackets 20 are buckled on the outer periphery of one battery cell 10, which may be the situation in which after buckled, the two brackets 20 are cladded on partial region of the outer surface of the side wall 111 of the battery cell 10, or alternatively a closed region formed by buckling the two brackets 20 along the circumferential direction of the battery cell 10 is cladded on the outer surface of the side wall 111 of the battery cell 10.

As shown in Fig. 13, each bracket 20 has an abutting surface 24 on which the accommodating part 23 is formed, and the abutting surface 24 of one of the two brackets 20 is configured to abut against the abutting surface 24 of the other bracket 20, so that the accommodating part 23 of one of the two brackets 20 and the accommodating part 23 of the other bracket 20 together define an accommodating space with two opening ends, and the accommodating space is configured to accommodate at least part of the side wall 111 of the case 11.

The two brackets 20 are buckled on the outer periphery of one battery cell 10, and the two brackets 20 can completely limit the position of the battery cell 10 in the radial and axial directions, so that the battery 100 can be mounted on the bracket 20 more stably, and the possibility of the battery cell 10 moving relative to the bracket 20 is reduced.

In some examples, the two brackets 20 are connected fixedly.

The two brackets 20 can be fixedly connected by means of bonding, bolt fastening and the like. For example, an adhesive is disposed between the abutting surfaces 24 of the two brackets 20, so that the two brackets 20 are fixedly connected through the adhesive, or alternatively the two brackets 20 are fixedly connected by allowing a bolt to passing through the two brackets 20 sequentially. In other examples, the two brackets 20 may have no connection relationship, as long as the abutting surfaces 24 of the two brackets 20 fit.

The two brackets 20 are fixedly connected, so that the two brackets 20 remain the state of being buckled on the outer periphery of one battery cell 10, and thus the battery 100 is more stably mounted on the bracket 20, and the possibility of the battery cell 10 moving relative to the bracket 20 is reduced.

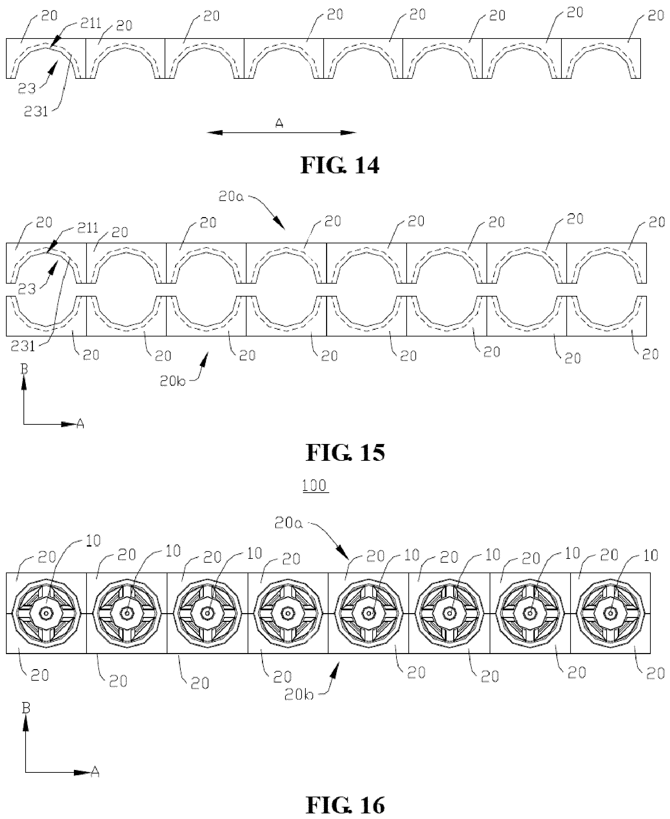

Please refer to Fig. 14, which is a schematic structural view of a plurality of brackets 20 arranged side by side as provided by some examples of the present application. In some examples, the battery 100 includes a plurality of brackets 20 arranged side by side and integrally formed.

The plurality of brackets 20 are arranged side by side along a first direction A. The plurality of brackets 20 are arranged side by side, and when a battery cell 10 is mounted on each bracket 20, the axial direction of the battery cell 10 corresponding to each bracket 20 is consistent.

The integral forming of the plurality of brackets 20 refers to that the plurality of brackets 20 is an integrally formed structure formed by employing an integral forming method. The integral forming method includes pouring, injection molding, stamping, and the like. **In** other examples, the plurality of brackets 20 may also be connected by means of bolts, screws, adhesives, or the like.

The battery 100 includes the plurality of brackets 20 that are arranged side by side, and thus a plurality of battery cells 10 can be mounted, which can increase the electric energy of the battery 100. According to actual needs, the battery 100 may also include only one bracket 20. The plurality of brackets 20 are integrally formed and are easy to manufacture, and the plurality of brackets 20 arranged side by side do not need to be connected when assembled into the battery 100, which simplifies the manufacturing procedure of the battery 100 and reduces the manufacturing difficulty of the battery 100.

In an example, the battery 100 includes multiple rows of brackets 20 arranged along a second direction B. The arrangement direction of the multiple rows of brackets 20 is perpendicular to the side-by-side direction of the plurality of brackets 20, that is, the first direction A is perpendicular to the second direction B. Each row of brackets 20 includes a plurality of brackets 20 arranged side by side along the first direction A. Two adjacent rows of brackets 20 are buckled on the outer periphery of one row of battery cells 10 to limit the position of the battery cells 10 along the radial position.

Please refer to Figs. 15 and 16, Fig. 15 is a schematic diagram of an arrangement of the two rows of brackets 20 provided by some examples of the present application, and Fig. 16 is a schematic structure view of a battery 100 including two rows of brackets 20 provided by some examples of the present application. The battery 100 includes two rows of brackets 20 arranged along the second direction B. For the convenience of description, the two rows of brackets 20 are respectively defined as a first row 20a and a second row 20b. Each row of brackets 20 includes a plurality of brackets 20 arranged side by side along the first direction A. The number of brackets 20 in the first row 20a is the same as that in the second row 20b, and the brackets 20 in the first row 20a are disposed in one-to-one correspondence with the brackets 20 in the second row 20b. Each bracket 20 is provided with an accommodating part 23. The inlet of the accommodating part 23 of each bracket 20 in the first row 20a is disposed opposite to the inlet of the accommodating part 23 of the corresponding bracket 20 in the second row 20b, and each bracket 20 in the first row 20a and the corresponding bracket 20 in the second row 20b jointly limit the position of the corresponding battery cell 10.

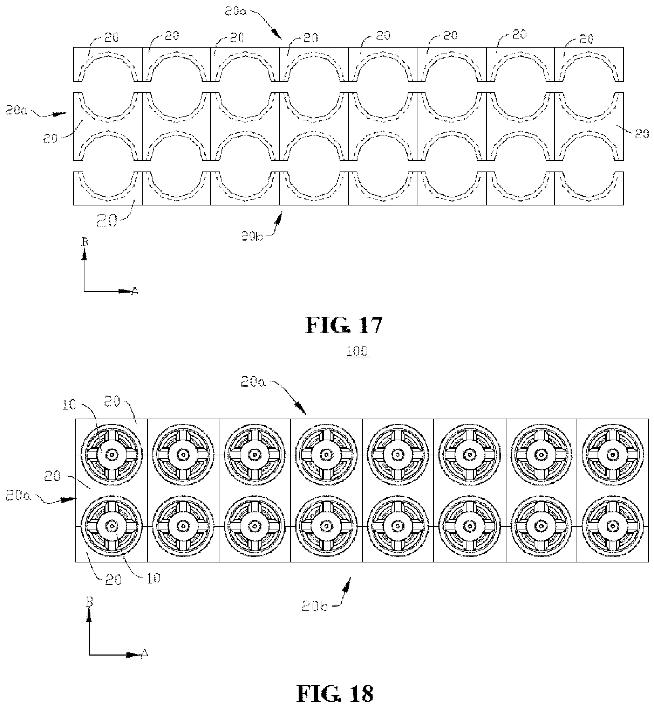

In some examples, the battery 100 includes at least three rows of brackets 20 arranged along the first direction A. Please refer to Figs. 17 and 18, Fig. 17 is a schematic diagram of the arrangement of the three rows of brackets 20 provided by some examples of the present application, and Fig. 18 is a schematic structural view of a battery 100 including the three rows of brackets 20 as provided by some examples of the present application. For the convenience of description, among the at least three rows of brackets 20, two rows of brackets 20 located at the end portion are defined as the first row 20a and the second row 20b respectively, and the rest are the middle row 20c. Each row of brackets 20 includes a plurality of brackets 20 arranged side by side along the second direction B, and the number of brackets 20 in each row is the same. Each bracket 20 is provided with an accommodating part 23, and the corresponding brackets 20 in two adjacent rows jointly limit the battery cell 10.

The brackets 20 of the first row 20a and the second row 20b are each provided with one accommodating part 23, and each bracket 20 of the middle row 20c is provided with two accommodating parts 23 that are opposite to each other.

In some examples, the side of the bracket 20 opposite to the corresponding battery cell 10 is a plane.

In an example in which the battery cell 10 includes two rows of brackets 20, the side of each bracket 20 opposite to the battery cell 10 is a plane. In an example in which the battery cell 10 includes at least three rows of brackets 20, the sides of the brackets 20 opposite to the battery cell 10 in the first row 20a and the second row 20b located at two ends of the battery cell are each a plane.

The side of the bracket 20 opposite to the corresponding battery cell 10 is a plane, which facilitates the mounting of the bracket 20 and enables the bracket 20 to better cooperate with other structures.

In some examples, two first position-limiting portions 13 are disposed on the side wall 111, and the two first position-limiting portions 13 are arranged at intervals on the side wall 111 of the case 11 along the axial direction; and each of the second position-limiting portions 21 is configured to be snap fitted with one of the first position-limiting portions 13.

The two first position-limiting portions 13 are arranged at intervals along the axial direction of the battery cell 10, and the structures of the two first position-limiting portions 13 may be the same or different. For example, in some examples, the two first position-limiting portions 13 are both annular grooves disposed on the side wall 111. As another example, one of the two first position-limiting portions 13 is a clamping groove, and the other is a second protrusion (not shown).

Along the axial direction of the battery cell 10, the distance between the two first position-limiting portions 13 does not exceed the dimension of the bracket 20 along the axial direction of the battery cell 10.

The two first position-limiting portions 13 are arranged at intervals along the axial direction of the battery cell 10, and correspondingly, two second position-limiting portions 21 are provided on the bracket 20 at intervals along the axial direction of the battery cell 10. The second position-limiting portions 21 are disposed in one-to-one correspondence with the first position-limiting portions 13, and each second position-limiting portion 21 is configured to be snap fitted with one of the first position-limiting portions 13, so as to more firmly limit the position of the battery cell 10 in the axial direction.

In some examples, the case 11 is cylindrical. Of course, the case 11 can also be a rectangular structure.

The case 11 of the battery cell 10 is cylindrical, that is, the case 11 has a regular structure, which is more convenient for the battery cell 10 to be mounted on the bracket 20.

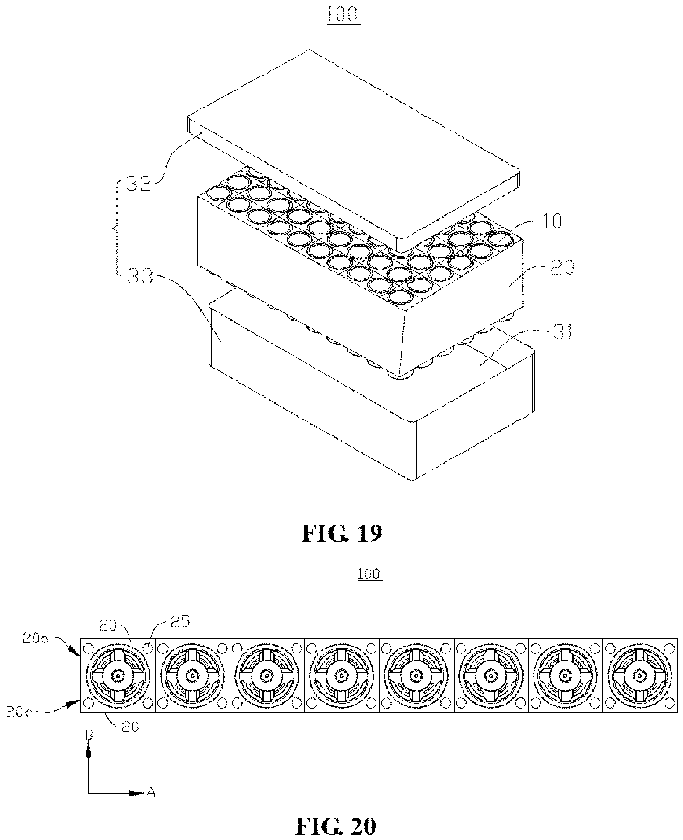

Please refer to Fig. 19, which is a schematic structural view of a battery 100 provided by some examples of the present application. In some examples, the battery 100 further includes a box body 30, the battery cell 10 is accommodated in the box body 30, and the bracket 20 is fixed in the box body 30.

The box body 30 is used for providing a mounting space 31 for the battery cell 10 and the bracket 20. In some examples, the box body 30 may include a first part 32 and a second part 33 that cover each other to define a mounting space 31 for accommodating the battery cell 10. Of course, the connection between the first part 32 and the second part 33 may be sealed by a sealing member (not shown), and the sealing member may be a sealing ring, a sealing glue or the like.

The first part 32 and the second part 33 may have various shapes, such as cuboid, cylinder, etc. The first part 32 may be a hollow structure with one side open, and the second part 33 may also be a hollow structure with one side open, and the open side of the second part 33 covers the open side of the first part 32, so as to form a box body 30 having a mounting space 31. Of course, it may also be the situation that the first part 32 is a hollow structure with one side open, and the second part 33 is a plate structure, and the second part 33 covers the open side of the first part 32 to form the box body 30 having the mounting space 31.

The bracket 20 may be fixed in the mounting space 31 of the box body 30 by means of bolts, screws, adhesives, or the like.

The bracket 20 is fixed in the box body 30 to prevent the bracket 20 from moving in the box body 30, thereby reducing the possibility of the battery cell 10 moving in the box body 30.

In the battery 100, there may be one or more battery cells 10. If there are a plurality of battery cells 10, the plurality of battery cells 10 can be connected in series or parallel or in a parallel-series connection manner, and the parallel-series connection refers to that there are both series and parallel connections among the plurality of battery cells 10. The plurality of battery cells 10 can be directly connected in series or parallel or in a parallel-series connection manner, and then the entirety of the plurality of battery cells 10 is accommodated in the box body 30; and of course, it may also be the situation that the plurality of battery cells 10 are first connected in series or parallel or in a parallel-series connection manner to form a module of the battery 100, and then a plurality of modules of the battery 100 are connected in series or parallel or in a parallel-series connection manner to form a whole that is accommodated in the box body 30.

In some examples, the battery 100 may further include a bus member (not shown), and the electrical connection among the plurality of battery cells 10 can be achieved through the bus member, so as to realize the series connection or parallel connection or parallel-series connection of the plurality of battery cells 10.

Please refer to Fig. 20, which is a schematic structural view of a battery 100 provided by yet still other examples of the present application. In some examples, the bracket 20 is further provided with a flow channel 25 configured to accommodate a fluid for regulating the temperature of the battery cell 10.

The fluid is accommodated in the flow channel 25 and can exchange heat with the battery cell 10 through the bracket 20, thereby regulating the temperature of the battery cell 10. The fluid may be a gas or liquid. The temperature of the battery cell 10 can be regulated according to the temperature required for the normal operation of the battery 100. The fluid contained in the flow channel 25 increases the temperature of the battery cell 10 to make the battery cell 10 operate normally when the environmental temperature is relatively lower, and the fluid contained in the flow channel 25 reduces the temperature of the battery cell 10 to make the battery cell 10 operate normally and ensure the safety of the battery 100 when the environmental temperature or the temperature of the battery cell 10 is too high.

The flow channel 25 not only can accommodate the fluid that regulates the temperature of the battery cell 10 to regulate the temperature of the battery cell 10, but also can reduce the weight of the bracket 20, thereby reducing the weight of the battery 100.

In some examples, the flow channel 25 runs through both ends of the bracket 20, along the axial direction of the battery cell 10.

The flow channel 25 runs through both ends of the bracket 20 along the axial direction of the battery cell 10. The fluid can flow into the flow channel 25 from one end of the flow channel 25 and flow out of the flow channel 25 from the other end of the flow channel 25, and during the process of flowing in the flow channel 25, the fluid exchanges heat with the battery cell 10 through the bracket 20, so as to regulate the temperature of the battery cell 10.

Each bracket 20 is correspondingly provided with at least one flow channel 25.

The flow channel runs through both ends of the bracket 20, which facilitates the heat exchange between the fluid flowing through the flow channel 25 and the battery cell 10, and improves the temperature regulation efficiency of the battery cell 10.

As shown in Figs. 12 and 13, some examples of the present application provide a battery 100. The battery 100 includes a battery cell 10 and two brackets 20. The battery cell 10 is cylindrical, and along the axial direction of the battery cell 10, two first position-limiting portions 13 are arranged on the side wall 111 of the case 11 at intervals, and each first position-limiting portion 13 is an annular groove. Each bracket 20 is formed with an accommodating part 23, and the fitting surface 231 of the accommodating part 23 is an arc surface. Along the axial direction of the battery cell 10, both ends of each accommodating part 23 are provided with second position-limiting portions 21. Each second position-limiting portion 21 is provided with a notch 211, and the battery cell 10 is clamped into the notch 211, so that the second position-limiting portion 21 is inserted in the first position-limiting portion 13. The two brackets 20 are buckled on the outer periphery of the battery cell 10 from the radial direction of the battery cell 10 oppositely, and form a circumferentially closed cladding space with two axial ends open. The two axial ends of the battery cell 10 extend out of the closed space and are respectively located outside the two second position-limiting portions 21, so that the end cover 12 is located outside the sealed space.

An example of the present application further provides an electrical device including the battery 100 provided by any of the aforementioned examples.

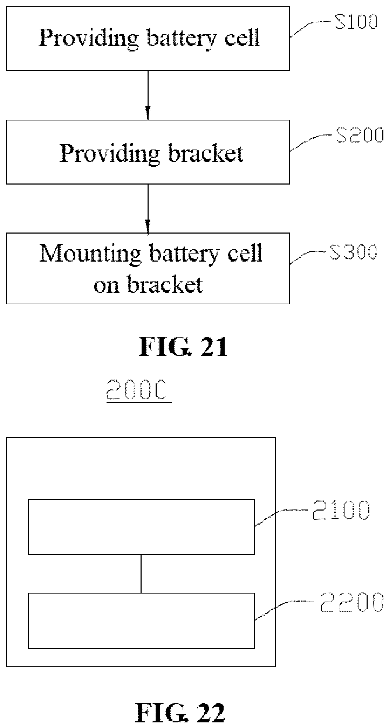

Please refer to Fig. 21, which is a flowchart of a method for manufacturing a battery 100 as provided by some examples of the present application. A method for manufacturing a battery 100 includes:
step S100. providing a battery cell 10;
wherein the battery cell 10 includes a case 11 and an end cover 12 that are hermetically connected, with a first position-limiting portion 13 being disposed on a side wall 111 of the case 11;
step S200. providing a bracket 20 that is provided with a second position-limiting portion 21; and
step S300. mounting the battery cell 10 on the bracket 20, so that the second position-limiting portion 21 is snap fitted with the first position-limiting portion 13 to achieve position limitation of the battery cell 10 in the axial direction of the battery cell 10.

The first position-limiting portion 13 on the battery cell 10 and the second position-limiting portion 21 on the bracket 20 are snap fitted, so that not only the axial position limitation of the battery cell 10 can be realized, but also the second position-limiting portion 21 can give place to the end cover 12 to give a space of the battery cell 10 in the axial direction so that the end cover 12 can be actuated to relieve the internal pressure of the battery cell 10 when the internal pressure or temperature of the battery cell 10 reaches a threshold. The end cover 12 can be actuated to realize pressure relief without the need of overcoming the limitation of the second position-limiting portion 21 on the bracket 20 that limits the position of the battery cell 10 in the axial direction, and the bracket 20 is prevented from affecting the pressure relief of the battery cell 10, thereby relieving the pressure of the battery cell 10 in time, reducing the risk of explosion caused by excessive internal pressure of the battery cell 10 and the like, and improving the safety performance of the battery cell 10.

Please refer to Fig. 22, which is a schematic structural view of a device 2000 for manufacturing a battery as provided by examples of the present application. The device 2000 for manufacturing a battery includes a providing means 2100 and an assembling means 2200. The providing means 2100 is configured to provide a battery cell 10 and a bracket 20. The battery cell 10 includes a case 11 and an end cover 12 that are hermetically connected, with a first position-limiting portion 13 being disposed on a side wall 111 of the case 11. The bracket 20 is provided with a second position-limiting portion 21; and the assembling means 2200 is configured to mount the battery cell 10 on the bracket 20, so that the second position-limiting portion 21 is snap fitted with the first position-limiting portion 13 to limit the position of the battery cell 10 at least in the axial direction of the battery cell 10.

The above is only preferred embodiments of the present application, and is not used for limiting the present application. For those skilled in the art, various modifications and variations can be made to the present application. Any modifications, equivalent replacements, improvements, etc. made within the spirit and principle of the present application shall be included within the scope of protection of the appended claims.

## Claims

1. A battery, wherein the battery comprises:
a battery cell (10) comprising a case (11) and an end cover (12) that are hermetically connected, with a first position-limiting portion (13) being disposed on a side wall (111) of the case (11); and
a bracket (20) provided with a second position-limiting portion (21) that is configured to be snap fitted with the first position-limiting portion (13) to limit a position of the battery cell (10) at least in an axial direction of the battery cell (10);
**characterised in that**, the bracket (20) further comprises a body part (22) connected with the second position-limiting portion (21), the body part (22) is disposed corresponding to the side wall (111), and the second position-limiting portion (21) and the body part (22) encloses an accommodating part (23) which is configured to accommodate at least part of the side wall (111); and
wherein one end of the body part (22) along the axial direction is provided with two of the second position-limiting portions (21) which extend in opposite directions to form two of the accommodating parts (23) with the body part (22), the two of the accommodating parts (23) are disposed on two opposite sides of the bracket (20), and each of the accommodating parts (23) is provided with one of the battery cells correspondingly.

2. The battery according to claim 1, wherein one of the first position-limiting portion (13) and the second position-limiting portion (21) is a clamping groove, and the other is a first protrusion.

3. The battery according to claim 2, wherein the clamping groove is an annular groove disposed on an outer surface of the side wall (111).

4. The battery according to claim 3, wherein a convex portion (113) protruding toward the interior of the battery cell (10) is formed at a position on an inner surface of the side wall (111) corresponding to the annular groove; and
the convex portion (113) is configured to limit the end cover (12) from moving in a direction towards the interior of the battery cell (10).

5. The battery according to any one of claims 1-4, wherein the second position-limiting portion (21) is disposed at an end portion of the bracket (20) along the axial direction.

6. The battery according to any one of claims 1-5 , wherein the accommodating part (23) has a fitting surface (231) configured to fit a contour of the outer surface of the side wall (111).

7. The battery according to claim 6, wherein the fitting surface (231) is an arc surface, and the fitting surface (231) is configured to limit a position of the battery cell (10) along a radial direction of the battery cell (10).

8. The battery according to any one of claims 1-7, wherein the battery comprises two of the brackets (20), and the two of the brackets (20) are buckled on an outer periphery of one of the battery cells;
wherein preferably, the two of the brackets (20) are connected fixedly.

9. The battery according to any one of claims 1-8, wherein the battery comprises a plurality of the brackets (20) that are arranged side by side and integrally formed.

10. The battery according to claim 1, wherein a side of the bracket (20) opposite to the corresponding battery cell (10) is a plane.

11. The battery according to any one of claims 1-10, wherein two of the first position-limiting portions (13) are disposed on the side wall (111), and the two of the first position-limiting portions (13) are arranged at intervals along the axial direction on the side wall (111) of the case (11); and
each of the second position-limiting portions (21) is configured to be snap fitted with one of the first position-limiting portions (13).

12. The battery according to any one of claims 1-11, wherein the case (11) is cylindrical; and/or
wherein the battery further comprises a box body (30), the battery cell (10) is accommodated in the box body (30), and the bracket (20) is fixed in the box body (30).

13. The battery according to any one of claims 1-12, wherein the bracket (20) is further provided with a flow channel (25) configured to accommodate a fluid for regulating the temperature of the battery cell (10).

14. The battery according to claim 13, wherein the flow channel (25) runs through both ends of the bracket (20), along the axial direction of the battery cell (10).

15. An electrical device, wherein the electrical device comprises the battery according to any one of claims 1-14.

## Patentansprüche

1. Batterie, wobei die Batterie Folgendes umfasst:
eine Batteriezelle (10), die ein Gehäuse (11) und eine Endabdeckung (12) umfasst, die hermetisch verbunden sind, wobei ein erster Positionsbegrenzungsabschnitt (13) an einer Seitenwand (111) des Gehäuses (11) angeordnet ist; und
eine Halterung (20), die mit einem zweiten Positionsbegrenzungsabschnitt (21) versehen ist, der dazu ausgelegt ist, mit dem ersten Positionsbegrenzungsabschnitt (13) eingerastet zu werden, um eine Position der Batteriezelle (10) zumindest in einer axialen Richtung der Batteriezelle (10) zu begrenzen;
**dadurch gekennzeichnet, dass**
die Halterung (20) ferner einen Körperteil (22) umfasst, der mit dem zweiten Positionsbegrenzungsabschnitt (21) verbunden ist, wobei der Körperteil (22) entsprechend der Seitenwand (111) angeordnet ist und der zweite Positionsbegrenzungsabschnitt (21) und der Körperteil (22) einen Aufnahmeteil (23) umschließen, der dazu ausgelegt ist, zumindest einen Teil der Seitenwand (111) aufzunehmen; und
wobei ein Ende des Körperteils (22) entlang der axialen Richtung mit zwei der zweiten Positionsbegrenzungsabschnitte (21) versehen ist, die sich in entgegengesetzte Richtungen erstrecken, um zwei der Aufnahmeteile (23) mit dem Körperteil (22) zu bilden, wobei die beiden Aufnahmeteile (23) an zwei gegenüberliegenden Seiten der Halterung (20) angeordnet sind und jeder der Aufnahmeteile (23) entsprechend mit einer der Batteriezellen versehen ist.

2. Batterie nach Anspruch 1, wobei entweder der erste Positionsbegrenzungsabschnitt (13) oder der zweite Positionsbegrenzungsabschnitt (21) eine Klemmnut ist und der andere ein erster Vorsprung ist.

3. Batterie nach Anspruch 2, wobei die Klemmnut eine ringförmige Nut ist, die auf einer äußeren Oberfläche der Seitenwand (111) angeordnet ist.

4. Batterie nach Anspruch 3, wobei ein konvexer Abschnitt (113), der in Richtung des Inneren der Batteriezelle (10) vorsteht, an einer Position auf einer inneren Oberfläche der Seitenwand (111) gebildet ist, die der ringförmigen Nut entspricht; und
der konvexe Abschnitt (113) dazu ausgelegt ist, die Endabdeckung (12) daran zu hindern, sich in eine Richtung ins Innere der Batteriezelle (10) zu bewegen.

5. Batterie nach einem der Ansprüche 1-4, wobei der zweite Positionsbegrenzungsabschnitt (21) an einem Endabschnitt der Halterung (20) entlang der axialen Richtung angeordnet ist.

6. Batterie nach einem der Ansprüche 1-5, wobei der Aufnahmeteil (23) eine Passfläche (231) aufweist, die dazu ausgelegt ist, an eine Kontur der äußeren Oberfläche der Seitenwand (111) zu passen.

7. Batterie nach Anspruch 6, wobei die Passfläche (231) eine Bogenfläche ist und die Passfläche (231) dazu ausgelegt ist, eine Position der Batteriezelle (10) entlang einer radialen Richtung der Batteriezelle (10) zu begrenzen.

8. Batterie nach einem der Ansprüche 1-7, wobei die Batterie zwei der Halterungen (20) umfasst und die zwei der Halterungen (20) an einem Außenumfang einer der Batteriezellen gekrümmt sind;
wobei vorzugsweise die beiden Halterungen (20) fest verbunden sind.

9. Batterie nach einem der Ansprüche 1-8, wobei die Batterie mehrere der Halterungen (20) umfasst, die Seite an Seite angeordnet und integral ausgebildet sind.

10. Batterie nach Anspruch 1, wobei eine Seite der Halterung (20) gegenüber der entsprechenden Batteriezelle (10) eine Ebene ist.

11. Batterie nach einem der Ansprüche 1-10, wobei zwei der ersten Positionsbegrenzungsabschnitte (13) an der Seitenwand (111) angeordnet sind und die zwei der ersten Positionsbegrenzungsabschnitte (13) in Intervallen entlang der axialen Richtung an der Seitenwand (111) des Gehäuses (11) angeordnet sind; und
jeder der zweiten Positionsbegrenzungsabschnitte (21) dazu ausgelegt ist, mit einem der ersten Positionsbegrenzungsabschnitte (13) eingerastet zu werden.

12. Batterie nach einem der Ansprüche 1-11, wobei das Gehäuse (11) zylindrisch ist; und/oder
wobei die Batterie ferner einen Kastenkörper (30) umfasst, die Batteriezelle (10) in dem Kastenkörper (30) aufgenommen ist und die Halterung (20) in dem Kastenkörper (30) fixiert ist.

13. Batterie nach einem der Ansprüche 1-12, wobei die Halterung (20) ferner mit einem Strömungskanal (25) versehen ist, der dazu ausgelegt ist, ein Fluid zum Regulieren der Temperatur der Batteriezelle (10) aufzunehmen.

14. Batterie nach Anspruch 13, wobei der Strömungskanal (25) durch beide Enden der Halterung (20) entlang der axialen Richtung der Batteriezelle (10) verläuft.

15. Elektrische Vorrichtung, wobei die elektrische Vorrichtung die Batterie nach einem der Ansprüche 1-14 umfasst.

## Revendications

1. Batterie, laquelle batterie comprend :
une cellule de batterie (10) comprenant un boîtier (11) et un capot d'extrémité (12) qui sont raccordés de manière hermétique, avec une première partie de limitation de position (13) disposée sur une paroi latérale (111) du boîtier (11) ; et
un support (20) pourvu d'une deuxième partie de limitation de position (21) qui est configurée pour s'encliqueter avec la première partie de limitation de position (13) pour limiter une position de la cellule de batterie (10) au moins dans une direction axiale de la cellule de batterie (10) ;
**caractérisée en ce que**
le support (20) comprend en outre une partie de corps (22) raccordée à la deuxième partie de limitation de position (21), la partie de corps (22) étant disposée en correspondance de la paroi latérale (111), et la deuxième partie de limitation de position (21) et la partie de corps (22) enfermant une partie de logement (23) qui est configurée pour loger au moins une partie de la paroi latérale (111) ; et
une extrémité de la partie de corps (22) dans la direction axiale étant pourvue de deux des deuxièmes parties de limitation de position (21) qui s'étendent dans des directions opposées pour former deux des parties de logement (23) avec la partie de corps (22), les deux parties de logement (23) étant disposées sur deux côtés opposés du support (20), et chacune des parties de logement (23) étant pourvue de manière correspondante de l'une des cellules de batterie.

2. Batterie selon la revendication 1, dans laquelle l'une de la première partie de limitation de position (13) et de la deuxième partie de limitation de position (21) est une gorge de serrage, et l'autre est une première partie saillante.

3. Batterie selon la revendication 2, dans laquelle la gorge de serrage est une gorge annulaire disposée sur une surface extérieure de la paroi latérale (111).

4. Batterie selon la revendication 3, dans laquelle une partie convexe (113) faisant saillie vers l'intérieur de la cellule de batterie (10) est formée à une position sur une surface intérieure de la paroi latérale (111) correspondant à la gorge annulaire ; et
la partie convexe (113) est configurée pour empêcher le capot d'extrémité (12) de bouger dans une direction allant vers l'intérieur de la cellule de batterie (10).

5. Batterie selon l'une quelconque des revendications 1 à 4, dans laquelle la deuxième partie de limitation de position (21) est disposée à une partie d'extrémité du support (20) dans la direction axiale.

6. Batterie selon l'une quelconque des revendications 1 à 5, dans laquelle la partie de logement (23) a une surface d'assemblage (231) configurée pour s'assembler à un contour de la surface extérieure de la paroi latérale (111).

7. Batterie selon la revendication 6, dans laquelle la surface d'assemblage (231) est une surface arquée, et la surface d'assemblage (231) est configurée pour limiter une position de la cellule de batterie (10) dans une direction radiale de la cellule de batterie (10).

8. Batterie selon l'une quelconque des revendications 1 à 7, dans laquelle la batterie comprend deux des supports (20), et les deux supports (20) sont attachés sur une périphérie extérieure de l'une des cellules de batterie ;
les deux supports (20) étant de préférence raccordés de manière fixe.

9. Batterie selon l'une quelconque des revendications 1 à 8, dans laquelle la batterie comprend une pluralité des supports (20) qui sont disposés côte-à-côte et formés d'un seul tenant.

10. Batterie selon la revendication 1, dans laquelle un côté du support (20) qui est opposé à la cellule de batterie (10) correspondante est un plan.

11. Batterie selon l'une quelconque des revendications 1 à 10, dans laquelle deux des premières parties de limitation de position (13) sont disposées sur la paroi latérale (111), et les deux parties de limitation de position (13) sont disposées à intervalles dans la direction axiale sur la paroi latérale (111) du boîtier (11) ; et
chacune des deuxièmes parties de limitation de position (21) est configurée pour s'encliqueter avec l'une des premières parties de limitation de position (13).

12. Batterie selon l'une quelconque des revendications 1 à 11, dans laquelle le boîtier (11) est cylindrique ;
et/ou
dans laquelle la batterie comprend en outre un corps de boîte (30), la cellule de batterie (10) étant logée dans le corps de boîte (30), et le support (20) étant fixé dans le corps de boîte (30).

13. Batterie selon l'une quelconque des revendications 1 à 12, dans laquelle le support (20) est en outre pourvu d'un canal d'écoulement (25) configuré pour loger un fluide pour réguler la température de la cellule de batterie (10).

14. Batterie selon la revendication 13, dans laquelle le canal d'écoulement (25) s'étend à travers les deux extrémités du support (20), dans la direction axiale de la cellule de batterie (10).

15. Dispositif électrique, lequel dispositif électrique comprend la batterie selon l'une quelconque des revendications 1 à 14.
